# EUROPEAN PATENT SPECIFICATION

(11) **EP 3 875 651 B1**
(45) Date of publication and mention of the grant of the patent: **12.07.2023**
(21) Application number: 21159834.7
(22) Date of filing: 01.03.2021
(51) Int. Cl.: D04B 1/10, D04B 1/26, D04B 1/28

(54) **KNITTED SEMI-FINISHED PRODUCT FOR MANUFACTURING STOCKINGS, FOOTWEAR AND GLOVES AND PROCESS FOR THE ATTAINMENT THEREOF**
GESTRICKTES HALBFABRIKAT ZUR HERSTELLUNG VON STRÜMPFEN, SCHUHEN UND HANDSCHUHEN SOWIE VERFAHREN ZU DESSEN HERSTELLUNG
PRODUIT SEMI-FINI TRICOTÉ POUR LA FABRICATION DE BAS, DE CHAUSSURES ET DE GANTS ET PROCÉDÉ POUR SON OBTENTION

(30) Priority: 03.03.2020 IT 202000004468
(43) Date of publication of application: 08.09.2021
(73) Proprietor: MACPI S.p.A. PRESSING DIVISION, 25036 Palazzolo Sull'Oglio (Brescia) (IT); Altexa Srl, 21052 Busto Arsizio (VA) (IT)
(72) Inventor: LANCINI, Paolo, 25036 Palazzolo sull'Oglio (BS) (IT); MORLACCHI, Matteo, 21052 Busto Arsizio (VA) (IT)
(74) Representative: PGA S.p.A.

(56) References cited:
- WO-A1-97/16082
- WO-A2-2018/017854
- US-A- 5 086 518

## Description

### Field of the finding

The object of the present invention is a knitted semi-finished product for manufacturing stockings, footwear and gloves and a process for the attainment thereof. In particular, the object of the present invention is a semi-finished product for manufacturing impermeable footwear, stockings and gloves.

### Background of the finding

In such context, it is known to make impermeable gloves and footwear by coupling, via thermo-adhesive-bonding, an impermeable film to a previously-formed outer portion.

For example, the document WO 2008/028913 illustrates a process for making gloves and similar articles provided with a liner joined through a thermo-adhesive glue.

The document WO 2008/015098 illustrates a process for waterproofing a semi-finished product: footwear, gloves, clothing articles and accessories.

The document US 8,882,948 illustrates a device for making gloves in which a water-resistant insert, provided with thermoplastic adhesive, is inserted in a glove and fixed to a support element.

The public document WO2019180603, in the name of the same Applicants, illustrates a method for the three-dimensional forming of a footwear upper. In an embodiment illustrated in WO2019180603, provision is made for arranging an impermeable membrane between an outer sock and an inner sock of a semi-finished product, then subjected to heating in an oven and subsequently cooled in a cooling chamber.

Document WO2018017854A2 discloses a knitted component forming an overfoot portion and an underfoot portion of an article of footwear. In an embodiment, an unfolded element has a generally tubular sock-like configuration. First part and second part have a foot-like shape and are nearly identical in shape, though mirror-images or oppositely-oriented.

Document WO9716082A1 discloses an article of clothing and a method of making the same. One form of the article comprises a sock which is of a three-ply construction with the inside and outside plies being knit and the intermediate ply being made from a stretch and return polyurethane film.

Document US5086518A1 discloses a double-layered sock including an inner sock made of a moisture-permeable material such as polypropylene and an outer sock that absorbs such moisture. The inner sock is interposed between the skin of the foot and the absorbed moisture. The inner and outer layers are secured together, such as by sewing at the toe portion of each to form the double sock.

The Applicants have observed that the semi-finished products and the finished products (gloves, footwear, stockings) of known type, like those described above, can be improved regarding various aspects, especially with regard to the quality and comfort that they are capable of providing when worn.

The Applicants have in fact observed that the knitted semi-finished products, while being very comfortable and perfectly adapted to the form of those who wear it, are not always able to provide suitable waterproofing. Also the knitted products provided with impermeable membranes, like that described in the document WO2019180603, can be improved.

In particular, the Applicants have observed that the hydrophilic characteristic (intended as capacity to absorb water in liquid form) of the yarn or of the yarns, with which the semi-finished knitted products are made, can cause a rise of the water from the bottom to the top of the stocking, which at a certain point can pass on top of the membrane and re-descend towards the foot (in the case of stockings and footwear).

### Definitions

In the present description and in the enclosed claims, the terms "outer" and "inner" are referred to the semi-finished product and/or to the final product (stocking, footwear, glove) when worn by the user.

In the present description and in the enclosed claims, with the term "thermo-adhesive" it is intended a material comprising thermoplastic polymers, i.e. polymers formed by linear chains or chains with few branches, not bonded to each other. Therefore, it is sufficient to increase the temperature in order to bring them to a viscous state and hence be able to form them. The thermo-adhesives have the capacity to modify its own structure at a specific temperature (usually comprised between 60°C and 180°C) and hence melt once such temperature is reached and crosslink once cooled.

In the present description and in the enclosed claims, with "hydrophilic characteristic" or "hydrophilicity" of a material, it is intended the property of a material to absorb and retain a liquid, typically the water. The hydrophilicity can for example be characterized by means of the "speed of absorption of the water" or by means of the "surface wetting resistance", in particular the "speed of absorption of the water" or "water absorption rate" measured according to the norm JIS L 1907:2004 part 7.1.2 (Byreck method) and/or the "surface wetting resistance" or "water absorbency" measured according to the norm UNI EN ISO 24920.

### Summary

In such context, the Applicants have therefore set the objective of proposing a knitted semi-finished product for manufacturing stockings, footwear and gloves and a process for the attainment thereof that are capable of overcoming the above-indicated drawbacks.

The Applicants have set the objective of proposing a knitted semi-finished product for manufacturing stockings, footwear and gloves and hence also the stockings, footwear and gloves obtained therefrom which are capable of ensuring the maintenance of dry feet and hands and simultaneously of ensuring optimal wearability and optimal comfort.

The Applicants have in particular set the objective of preventing the wicking of the water along the outer surface of the semi-finished product to zones where the impermeable membrane is not present.

The Applicants have also set the objective of proposing a process for making such semi-finished product which is fast and relatively inexpensive.

The Applicants have found that the above-listed objects and still others can be substantially achieved by equipping the semi-finished product, while it is made (woven) by the machine, with a 'ring' or 'band', positioned in its upper part and preferably around the ankle/wrist, made with a yarn and/or a textile structure such to render it non-hydrophilic or in any case less hydrophilic than the portion of semi-finished product below the ring itself.

In particular, the Applicants have found that the above-listed objects and still others can be substantially achieved by a method and a knitted semi-finished product for manufacturing stockings, footwear and gloves and by a process for the attainment thereof according to one or more of the enclosed claims and/or according to one or more of the following aspects.

According to an independent aspect, the present invention regards a knitted semi-finished product for manufacturing stockings, footwear and gloves, comprising: a main waterproofed portion configured to contain a user's foot or hand, wherein the main waterproofed portion comprises an outer knitted portion and an inner waterproofing portion configured to prevent the passage of liquids from the outside to the inside of the semi-finished product; an auxiliary knitted portion delimiting an opening configured to receive the user's foot or hand.

At least one ring-shaped portion of the auxiliary knitted portion has a lower hydrophilic characteristic than a hydrophilic characteristic of said outer knitted portion.

Said at least one ring-shaped portion is directly connected to the outer knitted portion and is configured to stop or at least slow down the capillarity rise of a liquid absorbed by the outer knitted portion. In other words, such ring-shaped portion constitutes an anti-rise band of the water absorbed by the outer knitted portion. According to an independent aspect, the present invention regards a process for making a knitted semi-finished product for manufacturing stockings, footwear and gloves.

Provision is made for knitting an outer portion configured to contain a user's foot or hand.

Provision is made for knitting an auxiliary portion connected to the outer portion. The auxiliary knitted portion delimits an opening configured to receive the user's foot or hand.

Knitting the auxiliary portion comprises: knitting a ring-shaped portion directly connected to the outer knitted portion and, optionally, knitting an end portion directly connected to the ring-shaped portion on the side opposite the outer knitted portion.

Provision is also made for waterproofing the outer knitted portion by applying at least one impermeable membrane as an inner waterproofing portion to the outer knitting portion so as to obtain a main waterproofed portion, wherein the main waterproofed portion prevents the passage of liquids from the outside to the inside of the semi-finished product.

The ring-shaped portion has a lower hydrophilic characteristic than a hydrophilic characteristic of the outer knitted portion to stop or at least slow down the capillarity rise of a liquid absorbed by the outer knitted portion.

The main waterproofed portion is capable of preventing the passage of liquids from the outside to the inside of the semi-finished product but absorbs the liquid which, via capillarity, is capable of reaching all the outer parts of said main waterproofed knitted portion.

The Applicants have verified that the ring-shaped portion with lower hydrophilic characteristic constitutes a barrier to the rise of the water via capillarity which thereof is stopped or at least slowed down when it reaches such ring-shaped
The Applicants have also verified that such ring-shaped portion with lower hydrophilic characteristic can be easily and quickly attained during weaving. The attainment costs are therefore substantially the same as those relative to the production of a stocking with different threads commonly woven on circular or rectilinear looms.

Further aspects of the present invention are listed hereinbelow.

In one aspect, the auxiliary knitted portion comprises said ring-shaped portion and an end portion.

In one aspect, the outer knitted portion and the end portion are separated by said ring-shaped portion.

In one aspect, said ring-shaped portion has a lower hydrophilic characteristic than a hydrophilic characteristic of the end portion.

In one aspect, the outer knitted portion and the end portion have greater hydrophilic characteristics than said ring-shaped portion.

In one aspect, the hydrophilic characteristic of the ring-shaped portion measured as "speed of absorption of the water" according to the standard JIS L 1907:2004 part 7.1.2 (Byreck method) is smaller than 15mm/10min, preferably smaller than 10mm/10min, more preferably smaller than 5mm/10min, still more preferably equal to 0mm/10min, in vertical sense, i.e. in the direction from bottom to top, joining the outer portion and the end portion of the semi-finished product.

In one aspect, the hydrophilic characteristic of the outer knitted portion measured as "speed of absorption of the water" according to the standard JIS L 1907:2004 part 7.1.2 (Byreck method) is equal to or greater than 15mm/10min, preferably greater than 20mm/10min, in vertical sense.

In one aspect, the hydrophilic characteristic of the end portion measured as "speed of absorption of the water" according to the standard JIS L 1907:2004 part 7.1.2 (Byreck method) is equal to or greater than 15mm/10min, preferably greater than 20mm/10min, in vertical sense.

In one aspect, the surface wetting resistance (Spray test) of the ring-shaped portion measured according to the standard UNI EN ISO 24920 is equal to or greater than 90 (ISO 4), preferably equal to 100 (ISO 5).

In one aspect, the surface wetting resistance (Spray test) of the outer knitted portion measured according to the standard UNI EN ISO 24920 is equal to or lower than 80 (ISO 3), preferably lower than 70 (ISO 2).

In one aspect, the surface wetting resistance (Spray test) of the end portion measured according to the standard UNI EN ISO 24920 is lower than 80 (ISO 3), preferably lower than 70 (ISO 2).

In one aspect, the ring-shaped portion is made/woven with at least one yarn having a lower hydrophilic characteristic than a hydrophilic characteristic of the yarn(s) of the outer knitted portion.

In one aspect, the ring-shaped portion is made with at least one yarn having a lower hydrophilic characteristic than a hydrophilic characteristic of the yarn(s) of the end portion.

In one aspect, said at least one yarn of the ring-shaped portion is selected from the group comprising: glass, metal, rubber, silicone, PTFE-polytetrafluorethylene, polyurethane, polypropylene, polyester, acrylic, polyamide, optionally single-burr. In one aspect, the outer knitted portion is made with yarns selected from the group comprising: wool, cotton, polyamide, polyester, acrylic, polypropylene, rayon, modacrylic, optionally multi-burr.

In one aspect, the end portion is made with yarns selected from the group comprising: wool, cotton, polyamide, polyester, acrylic, polypropylene, rayon modacrylic, optionally multi-burr.

In one aspect, a textile structure of the ring-shaped portion is different from a textile structure of the outer knitted portion and/or of the end portion.

In one aspect, the outer knitted portion, the ring-shaped portion and the possible end portion are woven as a single tubular body.

In one aspect, the outer knitted portion, the ring-shaped portion and the possible end portion are made as a suitably-shaped open weave, then closed and sewed or sealed.

In one aspect, the outer knitted portion, the ring-shaped portion and the possible end portion are woven on a linear or circular loom, preferably in a single weaving step.

In one aspect, the main waterproofed portion comprises at least one impermeable membrane, preferably impermeable to water.

In one aspect, the impermeable membrane is extended over the entire outer knitted portion.

In one aspect, the impermeable membrane is extended at least to the ring-shaped portion.

In one aspect, the impermeable membrane is extended over the entire outer knitted portion.

In one aspect, the impermeable membrane is extended at least to the ring-shaped portion.

In one aspect, the impermeable membrane is breathable.

In one aspect, the membrane is polyurethane.

In one aspect, the membrane is made of polyester.

In one aspect, the membrane is made of polytetrafluoroethylene (PTFE).

In one aspect, the membrane is elastic.

In one aspect, the membrane has a shape similar to that of the inner sock and/or of the outer sock.

In one aspect, the impermeable membrane is joined, preferably heat-sealed, to the outer knitted portion, preferably through a plurality of thermo-adhesive points.

In one aspect, the main waterproofed portion comprises an inner sock and an outer sock defining said outer knitted portion, in which the impermeable membrane is interposed between the inner sock and the outer sock.

In one aspect, the impermeable membrane is heat-sealed to the inner sock and/or to the outer sock.

In one aspect, the inner sock and the outer sock are made of a single weaving process and hence are joined together.

In one aspect, the impermeable membrane has a plurality of thermo-adhesive points located on an outer face and/or on an inner face of the impermeable membrane.

In one aspect, the inner sock and/or the outer sock are joined to the impermeable membrane through said thermo-adhesive points.

In one aspect, the knitted semi-finished product is shaped in order to manufacture impermeable stockings or footwear.

In one aspect, the main waterproofed portion is configured to receive and contain the user's foot and the auxiliary knitted portion is configured to receive the ankle or part of the leg of the user.

In one aspect, the ring-shaped portion is configured for being positioned, when the user wears the stocking or the footwear, substantially at the ankle.

In one aspect, the knitted semi-finished product is shaped in order to manufacture impermeable gloves.

In one aspect, the main waterproofed portion is configured to receive and contain the user's hand and the auxiliary knitted portion is configured to receive the wrist or part of the arm of the user.

In one aspect, the object of the present invention is an impermeable glove made with the semi-finished product according to the invention.

Further characteristics and advantages will be clearer from the detailed description of preferred but not exclusive embodiments of a knitted semi-finished product for manufacturing stockings, footwear and gloves in accordance with the present invention.

### Description of the drawings

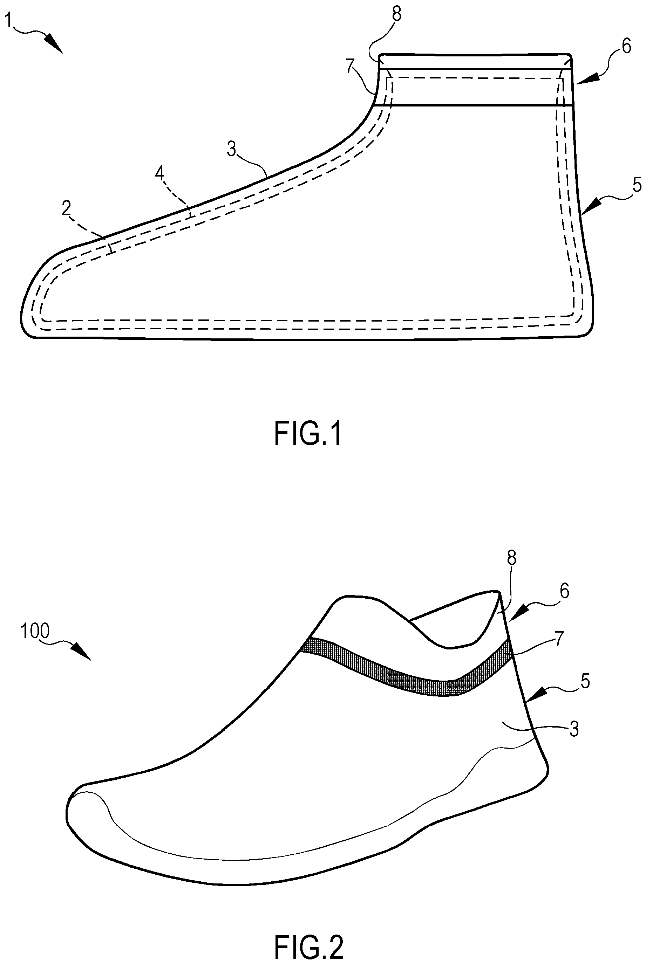

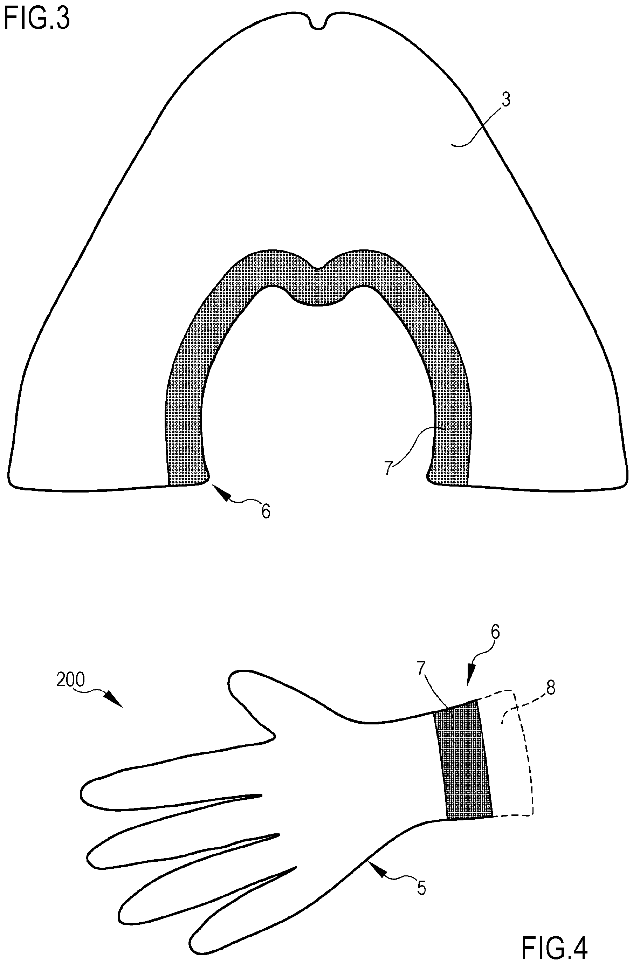

Such description will be set forth hereinbelow with reference to the enclosed drawings, provided only as a non-limiting example, in which:
▪ figure 1 schematically illustrates an upper of footwear made with a knitted semi-finished product according to the present invention;
▪ figure 2 illustrates a shoe provided with the upper of figure 1;
▪ figure 3 illustrates a portion of the semi-finished product in accordance with an embodiment variant of the present invention;
▪ figure 4 schematically illustrates a glove made with a knitted semi-finished product according to the present invention.

### Detailed description of an embodiment of the invention

With reference to figure 1, reference number 1 overall indicates a knitted semi-finished product in accordance with the present invention. Specifically, the semi-finished product 1 illustrated in figure 1 is used for manufacturing an impermeable upper of a shoe 100, for example like that of figure 2. A differently-shaped semi-finished product can be used for manufacturing an impermeable stocking or an impermeable glove 200, like that of figure 4.

The knitted semi-finished product 1 has a shape of a foot or in any case suitable for containing a foot and comprises an inner sock 2, an outer sock 3 and a membrane 4 interposed between the inner sock 2 and the outer sock 3. The impermeable membrane 4, breathable and possibly elastic is for example made of polytetrafluoroethylene (PTFE), polyurethane or polyester and defines an inner waterproofing portion configured to prevent the passage of liquids from the outside to the inside of the semi-finished product 1.

The inner sock 2 and the outer sock 3 are knitted and can be woven on a rectilinear or circular loom.

The inner sock 2 and the outer sock 3 can be made independently and then joined, or they can be woven as a single tubular textile element and then a portion of said single tubular element is turned up and inserted in the other, as is for example illustrated in the public document WO2019180603.

In embodiment variants, not illustrated in the enclosed figures, the semi-finished product 1 may comprise only the outer sock 3. In any case, said outer sock 3 defines an outer knitted portion intended to come into contact with the water and/or with the atmospheric agents.

In variants of the process, the outer sock 3 is made as a suitably-shaped open weave, for example as illustrated in figure 3, then closed and sewed or sealed. Such open weave can be joined to the impermeable and breathable membrane 4 before closing it and sewing it.

The impermeable and breathable membrane 4 externally covers the inner sock 2, internally covers the outer sock 3 and terminates below (observing figure 1) the instep. For example, the impermeable and breathable membrane 4 is heat-sealed to the inner sock 2 and/or to the outer sock 3 through a plurality of thermo-adhesive points (net) located on an outer face and/or on an inner face of the impermeable and breathable membrane 4.

It follows that the knitted semi-finished product 1 comprises a main waterproofed portion 5 configured to contain the foot and an auxiliary knitted portion 6 connected to the main waterproofed portion 5 and delimiting the opening configured to receive the foot. The inner sock 2 and the outer sock 3 are joined together at the instep of the foot, i.e. at the opening configured for inserting the foot, by means of said auxiliary knitted portion 6.

In the variant of figure 4, the main waterproofed portion 5 is configured to receive and contain the user's hand and the auxiliary knitted portion 6 is configured to receive the wrist or part of the arm of the user. The impermeable and breathable membrane 4 has the function of waterproofing the main waterproofed portion 5.

The main waterproofed portion 5, due to the impermeable and breathable membrane 4, prevents the passage of liquids from the outside to the inside of the knitted semi-finished product 1. The impermeable and breathable membrane 4 terminates at the auxiliary portion 6 and is only partially superimposed on the auxiliary portion 6. In this manner, the auxiliary portion 6, which adheres to the instep of the foot or to the ankle of the user and is mainly made only of knitting, ensures high comfort. In embodiment variants not illustrated in the enclosed figures, the impermeable and breathable membrane 4 may in any case reach an edge of the opening.

The outer sock 3 and the inner sock 2 are for example made with yarns made of wool, cotton, polyamide, polyester, acrylic, polypropylene, rayon, modacrylic, optionally multi-burr.

The auxiliary knitted portion 6 comprises a ring-shaped portion 7 and an end portion 8. In accordance with the process according to invention, provision is made for weaving the outer sock 3 with the auxiliary portion 6 and the inner sock 2 as a unique element.

Such ring-shaped portion 7 is directly connected and forms a single piece with the outer sock 3 and also with the end portion 8 but is woven with different yarns. The ring-shaped portion 7 is configured for being positioned, when the user wears the stocking or the footwear, substantially at the instep of the foot or at the ankle of the user and directed outward, like the outer sock 3.

In the embodiment variant of figure 3, the auxiliary portion 6 comprises the single ring-shaped portion 7 (which in figure 3 still does not have annular shape). Such ring-shaped portion 7 is woven with the outer sock 3 and takes on annular shape when the open weave (figure 3) is closed and sewn or sealed.

The ring-shaped portion 7 has a lower hydrophilic characteristic than a hydrophilic characteristic of the outer sock 3 and also of the end portion 8.

For example, the ring-shaped portion 7 is made with yarns of polytetrafluorethylene (PTFE), or single-burr polypropylene or single-burr polyamide which have lower hydrophilic characteristics than hydrophilic characteristics of the yarn(s) of the outer sock 3 and of the end portion 8.

For example, the "speed of absorption of the water" of the ring-shaped portion measured according to the standard JIS L 1907:2004 part 7.1.2 (Byreck method) is equal to 0mm/10min in vertical sense, i.e. in the direction, from bottom to top, joining the outer portion and the end portion.

For example, the surface wetting resistance (Spray test) of the ring-shaped portion 7 measured according to the standard UNI EN ISO 24920 is equal to 100 (ISO 5). For example, the "speed of absorption of the water" of the outer sock 3 and of the end portion 8 measured according to the standard JIS L 1907:2004 part 7.1.2 (Byreck method) is equal to 25mm/10min in vertical sense, i.e. in the direction joining the outer portion and the end portion. For example, the surface wetting resistance (Spray test) of the outer sock 3 and of the end portion 8 measured according to the standard UNI EN 24920 is equal to 70 (ISO 2).

In this manner, the water which is absorbed by the outer sock 3 (but cannot penetrate within the footwear due to the presence of the impermeable and breathable membrane 4), and rises via capillarity towards the ankle, is stopped (strongly slowed down) by the ring-shaped portion 7 and hence cannot rise up to the opening and penetrate within the footwear 100 itself.

## Claims

1. Knitted semi-finished product for manufacturing stockings, footwear and gloves, comprising:
a main waterproofed portion (5) configured to contain a user's foot or hand;
wherein the main waterproofed portion (5) comprises an outer knitted portion (3) and an inner waterproofing portion (4) configured to prevent the passage of liquids from the outside to the inside of the semi-finished product (1);
an auxiliary knitted portion (6) delimiting an opening configured to receive the user's foot or hand;
wherein the auxiliary knitted portion (6) comprises at least one ring-shaped portion (7); wherein said at least one ring-shaped portion (7) is directly connected to the outer knitted portion (3);
**characterised in that** the at least one ring-shaped portion (7) has a lower hydrophilic characteristic than a hydrophilic characteristic of said outer knitted portion (3) and is configured to stop or at least slow down the capillarity rise of a liquid absorbed by the outer knitted portion (3).

2. Semi-finished product according to claim 1, wherein the auxiliary knitted portion (6) comprises said ring-shaped portion (7) and an end portion (8), wherein the outer knitted portion (3) and the end portion (8) are separated by said ring-shaped portion (7).

3. Semi-finished product according to claim 1, wherein the ring-shaped portion (7) is made from at least one yarn having a lower hydrophilic characteristic than a hydrophilic characteristic of the yarn(s) of the outer knitted portion (3).

4. Semi-finished product according to claim 1 or 2 or 3, wherein the inner waterproofing portion (4) comprises at least one impermeable membrane.

5. Semi-finished product according to claim 4, wherein the impermeable membrane extends over the entire outer knitted portion (3) and at least to the ring-shaped portion (7).

6. Semi-finished product according to claim 4 or 5, wherein the main waterproofed portion (5) comprises an inner sock (2), an outer sock defining the outer knitted portion (3).

7. Semi-finished product according to claim 6, wherein the impermeable membrane (4) is interposed between the inner sock (2) and the outer sock.

8. Semi-finished product according to claim 7, wherein the impermeable membrane is heat-sealed to the inner sock (2) and/or to the outer sock.

9. Semi-finished product according to claim 7 or 8, wherein the impermeable membrane has a number of thermo-adhesive points located on one outer face and/or on one inner face of the impermeable membrane; wherein the inner sock (2) and/or the outer sock are joined to the impermeable membrane through said thermo-adhesive points.

10. Process for making a knitted semi-finished product for manufacturing stockings, footwear and gloves, comprising:
knitting an outer portion (3) configured to contain a user's foot or hand;
knitting an auxiliary portion (6) connected to the outer knitted portion (3); wherein
the auxiliary knitted portion (6) delimits an opening configured to accommodate a user's foot or hand; wherein knitting the auxiliary portion (6) comprises:
knitting a ring-shaped portion (7) directly connected to the outer knitted portion (3);
waterproofing the knitted outer portion (3) by applying at least one impermeable membrane (4) as an inner waterproofing portion (4) to the outer knitted portion (3) so as to obtain a main waterproofed portion (5), wherein the main waterproofed portion (5) prevents the passage of liquids from the outside to the inside of the semi-finished product (1);
**characterised in that** the ring-shaped portion (7) has a lower hydrophilic characteristic than a hydrophilic characteristic of the knitted outer portion (3) to stop or at least slow down the capillary rise of a liquid absorbed by the knitted outer portion (3).

11. Process according to claim 10, further comprising: knitting an end portion (8) directly connected to the ring-shaped portion (7) on the side opposite the outer knitted portion (3).

12. Process according to claim 10 or 11, wherein the ring-shaped portion (7) is woven with at least one yarn having a lower hydrophilic characteristic than a hydrophilic characteristic of the yarn(s) of the outer knitted portion (3).

13. Process according to claim 10 or 11 or 12, wherein the outer knitted portion (3), the ring-shaped portion (7) is woven continuously on a single linear or circular weave.

14. Process according to claim 10 or 11 or 12 or 13, wherein the at least one impermeable membrane (4) is breathable.

15. Process according to any of claims 10 to 14, wherein the impermeable membrane (4) extends at least to the ring-shaped portion (7).

## Patentansprüche

1. Gestricktes, halbfertiges Produkt zur Fertigung von Strümpfen, Schuhwerk und Handschuhen, umfassend:
einen wasserdichten Hauptabschnitt (5), welcher dazu eingerichtet ist, einen Fuß oder eine Hand eines Benutzers zu enthalten;
wobei der wasserdichte Hauptabschnitt (5) einen gestrickten äußeren Abschnitt (3) und einen wasserdichten inneren Abschnitt (4) umfasst, welcher dazu eingerichtet ist, den Durchlass von Flüssigkeiten von dem Äußeren zu dem Inneren des halbfertigen Produkts (1) zu verhindern;
einen gestrickten Hilfsabschnitt (6), welcher eine Öffnung begrenzt, welche dazu eingerichtet ist, den Fuß oder die Hand eines Benutzers aufzunehmen;
wobei der gestrickte Hilfsabschnitt (6) wenigstens einen ringförmigen Abschnitt (7) umfasst; wobei der wenigstens eine ringförmige Abschnitt (7) direkt mit dem gestrickten äußeren Abschnitt (3) verbunden ist;
**dadurch gekennzeichnet, dass** der wenigstens eine ringförmige Abschnitt (7) eine niedrigere hydrophile Eigenschaft als eine hydrophile Eigenschaft des gestrickten äußeren Abschnitts (3) aufweist und dazu eingerichtet ist, den Kapillaritätsanstieg einer durch den gestrickten äußeren Abschnitt (3) absorbierten Flüssigkeit zu stoppen oder wenigstens zu verlangsamen.

2. Halbfertiges Produkt nach Anspruch 1, wobei der gestrickte Hilfsabschnitt (6) den ringförmigen Abschnitt (7) und einen Endabschnitt (8) umfasst, wobei der gestrickte äußere Abschnitt (3) und der Endabschnitt (8) durch den ringförmigen Abschnitt (7) getrennt sind.

3. Halbfertiges Produkt nach Anspruch 1, wobei der ringförmige Abschnitt (7) aus wenigstens einem Garn hergestellt ist, welches eine niedrigere hydrophile Eigenschaft als eine hydrophile Eigenschaft des Garns / der Garne des gestrickten äußeren Abschnitts (3) aufweist.

4. Halbfertiges Produkt nach Anspruch 1 oder 2 oder 3, wobei der wasserdichte innere Abschnitt (4) wenigstens eine undurchlässige Membran umfasst.

5. Halbfertiges Produkt nach Anspruch 4, wobei sich die undurchlässige Membran über den gesamten gestrickten äußeren Abschnitt (3) hinweg und wenigstens zu dem ringförmigen Abschnitt (7) erstreckt.

6. Halbfertiges Produkt nach Anspruch 4 oder 5, wobei der wasserdichte Hauptabschnitt (5) eine innere Socke (2) umfasst, wobei eine äußere Socke den gestrickten äußeren Abschnitt (3) definiert.

7. Halbfertiges Produkt nach Anspruch 6, wobei die undurchlässige Membran (4) zwischen der inneren Socke (2) und der äußeren Socke eingefügt ist.

8. Halbfertiges Produkt nach Anspruch 7, wobei die undurchlässige Membran an die innere Socke (2) und/oder die äußere Socke heißgesiegelt ist.

9. Halbfertiges Produkt nach Anspruch 7 oder 8, wobei die undurchlässige Membran eine Anzahl von Thermoklebepunkten aufweist, welche an einer äußeren Fläche und/oder an einer inneren Fläche der undurchlässigen Membran angeordnet sind, wobei die innere Socke (2) und/oder die äußere Socke durch die Thermoklebepunkte mit der undurchlässigen Membran verbunden sind.

10. Verfahren zur Herstellung eines gestrickten, halbfertigen Produkts zur Fertigung von Strümpfen, Schuhwerk und Handschuhen, umfassend:
Stricken eines äußeren Abschnitts (3), welcher dazu eingerichtet ist, einen Fuß oder eine Hand eines Benutzers zu enthalten;
Stricken eines Hilfsabschnitts (6), welcher mit dem gestrickten äußeren Abschnitt (3) verbunden ist; wobei der gestrickte Hilfsabschnitt (6) eine Öffnung begrenzt, welche dazu eingerichtet ist, einen Fuß oder eine Hand eines Benutzers aufzunehmen; wobei das Stricken des Hilfsabschnitts (6) umfasst:
Stricken eines ringförmigen Abschnitts (7), welcher direkt mit dem gestrickten äußeren Abschnitt (3) verbunden ist;
Abdichten des gestrickten äußeren Abschnitts (3) durch Aufbringen wenigstens einer undurchlässigen Membran (4) als einen inneren wasserdichten Abschnitt (4) auf den gestrickten äußeren Abschnitt (3), um einen wasserdichten Hauptabschnitt (5) zu erhalten, wobei der wasserdichte Hauptabschnitt (5) den Durchlass von Flüssigkeiten von dem Äußeren zu dem Inneren des halbfertigen Produkts (1) verhindert;
**dadurch gekennzeichnet, dass** der ringförmige Abschnitt (7) eine niedrigere hydrophile Eigenschaft als eine hydrophile Eigenschaft des gestrickten äußeren Abschnitts (3) aufweist, um den Kapillaritätsanstieg einer durch den gestrickten äußeren Abschnitt (3) absorbierten Flüssigkeit zu stoppen oder wenigstens zu verlangsamen.

11. Verfahren nach Anspruch 10, ferner umfassend: Stricken eines Endabschnitts (8), welcher direkt mit dem ringförmigen Abschnitt (7) verbunden ist, an der dem gestrickten äußeren Abschnitt (3) entgegengesetzten Seite.

12. Verfahren nach Anspruch 10 oder 11, wobei der ringförmige Abschnitt (7) mit wenigstens einem Garn gewebt wird, welches eine niedrigere hydrophile Eigenschaft als eine hydrophile Eigenschaft des Garns / der Garne des gestrickten äußeren Abschnitts (3) aufweist.

13. Verfahren nach Anspruch 10 oder 11 oder 12, wobei der gestrickte äußere Abschnitt (3) und der ringförmige Abschnitt (7) kontinuierlich an ein einzelnes lineares oder kreisförmiges Gewebe gewebt wird.

14. Verfahren nach Anspruch 10 oder 11 oder 12 oder 13, wobei die wenigstens eine undurchlässige Membran (4) atmungsaktiv ist.

15. Verfahren nach einem der Ansprüche 10 bis 14, wobei sich die undurchlässige Membran (4) wenigstens zu dem ringförmigen Abschnitt (7) erstreckt.

## Revendications

1. Produit tricoté semi-fini destiné à la fabrication de bas, d'articles chaussants et de gants, comprenant :
une portion principale étanche à l'eau (5) conçue pour contenir un pied ou une main d'un utilisateur ;
la portion principale étanche à l'eau (5) comprenant une portion tricotée externe (3) et une portion interne étanche à l'eau (4) conçues pour empêcher le passage des liquides depuis l'extérieur vers l'intérieur du produit semi-fini (1) ;
une portion tricotée auxiliaire (6) délimitant une ouverture conçue pour recevoir le pied ou la main de l'utilisateur ;
la portion tricotée auxiliaire (6) comprenant au moins une portion en forme d'anneau (7) ; ladite au moins une portion en forme d'anneau (7) étant directement raccordée à la portion tricotée externe (3) ;
**caractérisé en ce que** la au moins une portion en forme d'anneau (7) présente une caractéristique hydrophile inférieure par rapport à une caractéristique hydrophile de ladite portion tricotée externe (3) et étant conçue pour stopper ou au moins ralentir la montée par capillarité d'un liquide absorbé par la portion tricotée externe (3).

2. Produit semi-fini selon la revendication 1, la portion tricotée auxiliaire (6) comprenant ladite portion en forme d'anneau (7) et une portion d'extrémité (8), la portion tricotée externe (3) et la portion d'extrémité (8) étant séparées par ladite portion en forme d'anneau (7).

3. Produit semi-fini selon la revendication 1, la portion en forme d'anneau (7) étant constituée à partir d'au moins un fil ayant une caractéristique hydrophile inférieure par rapport à une caractéristique hydrophile du(des) fil(s) de la portion tricotée externe (3).

4. Produit semi-fini selon la revendication 1 ou 2 ou 3, la portion interne étanche à l'eau (4) comprenant au moins une membrane imperméable.

5. Produit semi-fini selon la revendication 4, la membrane imperméable s'étendant sur la portion tricotée externe (3) entière et au moins vers la portion en forme d'anneau (7).

6. Produit semi-fini selon la revendication 4 ou 5, la portion principale étanche à l'eau (5) comprenant une chaussette interne (2), une chaussette externe définissant la portion tricotée externe (3).

7. Produit semi-fini selon la revendication 6, la membrane imperméable (4) étant interposée entre la chaussette interne (2) et la chaussette externe.

8. Produit semi-fini selon la revendication 7, la membrane imperméable étant thermoscellée à la chaussette interne (2) et/ou à la chaussette externe.

9. Produit semi-fini selon la revendication 7 ou 8, la membrane imperméable ayant un nombre de points thermoadhésifs localisés sur une face externe et/ou sur une face interne de la membrane imperméable ; la chaussette interne (2) et/ou la chaussette externe étant jointes à la membrane imperméable à travers lesdits points thermoadhésifs.

10. Procédé de fabrication d'un produit tricoté semi-fini pour la fabrication de bas, d'articles chaussants et de gants, comprenant :
le tricotage d'une portion externe (3) conçue pour contenir un pied ou une main d'un utilisateur ;
le tricotage d'une portion auxiliaire (6) raccordée à la portion tricotée externe (3) ;
la portion tricotée auxiliaire (6) délimitant une ouverture conçue pour loger un pied ou une main d'un utilisateur ;
le tricotage de la portion auxiliaire (6) comprenant :
le tricotage d'une portion en forme d'anneau (7) directement raccordée à la portion tricotée externe (3) ;
l'étanchéité à l'eau de la portion tricotée externe (3) par l'application d'au moins une membrane imperméable (4) comme portion interne étanche à l'eau (4) à la portion tricotée externe (3) afin d'obtenir une portion principale étanche à l'eau (5), la portion principale étanche à l'eau (5) empêchant le passage des liquides depuis l'extérieur vers l'intérieur du produit semi-fini (1) ;
**caractérisé en ce que** la portion en forme d'anneau (7) présente une caractéristique hydrophile inférieure par rapport à une caractéristique hydrophile de la portion tricotée externe (3) pour stopper ou au moins ralentir la montée par capillarité d'un liquide absorbé par la portion tricotée externe (3).

11. Procédé selon la revendication 10, comprenant en outre : le tricotage d'une portion d'extrémité (8) directement raccordée à la portion en forme d'anneau (7) sur le côté opposé à la portion tricotée externe (3).

12. Procédé selon la revendication 10 ou 11, la portion en forme d'anneau (7) étant tissée avec au moins un fil ayant une caractéristique hydrophile inférieure par rapport à une caractéristique hydrophile du(des) fil(s) de la portion tricotée externe (3).

13. Procédé selon la revendication 10 ou 11 ou 12, la portion tricotée externe (3), la portion en forme d'anneau (7) étant tissées de manière continue sur un tissage linéaire ou circulaire unique.

14. Procédé selon la revendication 10 ou 11 ou 12 ou 13, la au moins une membrane imperméable (4) étant respirable.

15. Procédé selon l'une quelconque des revendications 10 à 14, la membrane imperméable (4) s'étendant au moins vers la portion en forme d'anneau (7).
